## Europäisches Patentamt

## European Patent Office

## Office européen des brevets

(19)

(11) Veröffentlichungsnummer: **0 230 919**
**B1**

(12)

# EUROPÄISCHE PATENTSCHRIFT

(45) Veröffentlichungstag der Patentschrift:
**10.10.90**

(51) Int. Cl.⁵: **B65G 47/96**

(21) Anmeldenummer: **87100494.1**

(22) Anmeldetag: **16.01.87**

(54) **Kipp-Förderelement für einen Stückgutförderer.**

(30) Priorität: **31.01.86 DE 3602861**

(43) Veröffentlichungstag der Anmeldung:
**05.08.87 Patentblatt 87/32**

(45) Bekanntmachung des Hinweises auf die Patenterteilung:
**10.10.90 Patentblatt 90/41**

(84) Benannte Vertragsstaaten:
**CH FR GB IT LI NL**

(56) Entgegenhaltungen:
**GB-A- 2 078 187**

(73) Patentinhaber: **Bernhard Beumer Maschinenfabrik KG,
Oelder Strasse 40, D-4720 Beckum(DE)**

(72) Erfinder: **Pölling, Ludger, Soester Strasse 16,
D-4724 Wadersloh(DE)**

(74) Vertreter: **Hoormann, Walter, Dr.-Ing. et al, FORRESTER
& BOEHMERT Widenmayerstrasse 4/I,
D-8000 München 22(DE)**

## Beschreibung

Die Erfindung betrifft ein Kipp-Förderelement nach dem Oberbegriff des Anspruches 1.

Einem gattungsgemäßen Stückgutförderer, der in der Praxis auch kurz als Sorter bezeichnet wird, werden die Stückgutteile an wenigstens einer Aufgabestelle (häufig jedoch auch an mehreren Aufgabestellen) so aufgegeben, daß sie jeweils auf der im Förderzustand im wesentlichen horizontalen Tragfläche eines Förderelementes plaziert werden. Wenn vor- oder nachstehend davon die Rede ist, daß die Tragfläche der Förderelemente im Förderzustand "im wesentlichen" horizontal ist, so soll dieses zum Ausdruck bringen, daß die Tragfläche ggf. auch schalenförmig gekrümmt oder abgewinkelt sein kann. Der Förderstrang kann in einer horizontalen Ebene verlaufen, jedoch auch schräg zur Horizontalen bzw. raumgängig, wobei dafür Sorge zu tragen ist, daß die Stückgutteile nicht ungewollt von den Tragflächen heruntergleiten.

Die wesentliche Aufgabe eines Sorters besteht nun darin, die Stückgutteile jeweils an einer von mehreren seitlich zur Förderbahn angeordneten Abgabestationen abzugeben, um sie nach bestimmten Kriterien zu sortieren. Dieses kann bei Postpaketen bspw. eine Sortierung nach Postleitzahlen sein oder bei einem auf einem Flughafen eingesetzten Sorter eine Sortierung von aufgegebenen Gepäckstücken nach dem Flugziel od.dgl. Dabei werden die Stückgutteile im allgemeinen vor ihrer Aufgabe auf den Sorter mit einer Kodierung versehen oder sie weisen von vornherein eine Kennzeichnung auf, die nach ihrer Aufgabe von einer Leseeinrichtung lesbar ist, wobei die Kodierung bzw. Kennzeichnung einer bestimmten Abgabestation zugeordnet ist, und durch bestimmte Einrichtungen dafür gesorgt wird, daß ein einer bestimmten Abgabestation zugeordnetes Stückgutteil an dieser seitlich von dem Sorter abgegeben wird und an der betreffenden Abgabestelle – im allgemeinen über eine Rutsche – auf einen Förderer mit quer zum Sorter verlaufender Fördereinrichtung gelangt, von dem es zur Weiterbearbeitung fortgefördert wird.

Um die gewünschte Abgabe eines Stückgutteils an einer bestimmten Abgabestation zu verwirklichen, wäre es ersichtlich grundsätzlich möglich, ein Stückgutteil jeweils mit einem im wesentlichen quer zur Fördereinrichtung des Sorters verlaufenden Stempel od.dgl. von der (dabei im wesentlichen horizontal verbleibenden) Tragfläche des betreffenden Förderelementes seitlich abzuschieben. Eine solche Arbeitsweise ist jedoch insbesondere bei den heutzutage verwirklichten hohen Fördergeschwindigkeiten von Sortern, die bis zu 2 m/sec und mehr betragen, schon deshalb unbefriedigend, weil das Stückgut bei einer solchen Abgabe außerordentlich stark beansprucht wird. Eine möglichst schonende Behandlung des Stückgutes wird jedoch praktisch für alle Einsatzfälle von Sortern in höchstem Maße gewünscht.

Es sind daher Förderelemente für derartige Stückgutförderer entwickelt worden, bei denen die Tragfläche an einer Abgabestation um eine in Förderrichtung verlaufende, symmetrisch zur Tragfläche angeordnete Schwenkachse seitlich zu kippen ist, wobei eine mittige Anordnung der Schwenkachse zur Tragfläche gewählt wird, weil i.a. bei einem derartigen Sorter die Abgabestellen links und rechts zur Förderbahn angeordnet sind, so daß das Stückgut demgemäß (in Förderrichtung gesehen) wahlweise nach links oder rechts abzugeben ist. Diese vorbekannte Ausbildung hat sich jedoch noch als unbefriedigend erwiesen. Zunächst einmal hat sich gezeigt, daß die Stückgutteile in zahlreichen Anwendungsfällen – insbesondere wenn sie entgegen der Abgabeseite seitlich versetzt auf der Tragfläche angeordnet sind – beim Kippen zum überschlagen neigen, was für eine definierte Abgabe und insbesondere eine erstrebte schonende Behandlung höchst unerwünscht ist. Es kommt hinzu, daß bei einem seitlichen Abkippen der Tragfläche in der vorstehend beschriebenen Weise ein längliches Stückgutteil, welches i.a. in seiner Längsrichtung auf ein Förderelement aufgelegt wird, so von dem Sorter abgegeben wird, daß seine lange Längsseite vorn liegt, so daß die Aufnahme- bzw. Überführungseinrichtungen entsprechend breit ausgebildet sein bzw. mit entsprechenden Umlenkeinrichtungen versehen sein müssen, was wiederum nicht zu einer schonenden Stückgutbehandlung und im übrigen zu einem entsprechend großen Aufwand führt.

Um die vorstehend beschriebenen Förderelemente zu verbessern, sind auch bereits Förderelemente bekanntgeworden, bei denen die in Förderrichtung verlaufende Schwenkachse zum Abkippen der Tragfläche zur Längssymmetrieachse der Tragfläche seitlich versetzt ist. Ein solcher Versatz ist jedoch i.a. – insbesondere bei verhältnismäßig großen Tragflächen – nicht derart zu realisieren, daß die Schwenkachse im wesentlichen im Bereich eines seitlichen Längsrandes des Tragelementes liegt und demgemäß die im Förderzustand horizontale Tragfläche bei einem seitlichen Abkippen im wesentlichen nur nach unten abgesenkt wird, sondern es ist nur ein relativ geringer Versatz der Schwenkachse zur Längssymmetrieachse ausführbar, wodurch die Gefahr eines Überschlagens (Trudelns) des betreffenden Stückgutteils nicht ausreichend zu verringern ist. Da jedoch die Tragfläche eines hier in Rede stehenden Förderelementes aus den oben bereits erwähnten Gründen in aller Regel wahlweise nach links oder nach rechts kippbar sein muß, erfordert eine derartige Ausgestaltung zum Umschalten von der einen Schwenkachse auf die andere Schwenkachse zudem einen erheblichen Aufwand, der nicht nur mit entsprechenden Kosten verbunden ist, sondern aufgrund der relativ komplizierten Mechanik entsprechend störanfällig ist. Im übrigen werden auch bei diesem vorbekannten Förderelement längliche Stückgutteile so vom Sorter abgegeben, daß ihre lange Längsseite vorn liegt, so daß insoweit auch die oben bereits erörterten Nachteile vorliegen und im übrigen keine schonende Stückgutbehandlung erzielt wird.

Aus der GB-A 2 078 187 ist ein gattungsgemäßes Förderelement bekannt, dessen Tragfläche beim Kippen zugleich begrenzt gedreht wird, so daß ein in Längsrichtung auf einem Tragelement angeordnetes längliches Stückgutteil beim Kippvorgang in zweckmäßiger Weise eine gewisse Drehung erfährt. Zu diesem Zweck ist der sich schräg vom Tragelement nach unten erstreckende Lagerzapfen in einem ortsfesten Lager gelagert, dessen Lagergehäuse fest mit dem Stützteil des Förderelementes verbunden ist, so daß beim Kippvorgang eine gewisse Drehung der Tragfläche um die ortsfeste Längsachse des Lagerzapfens möglich ist, wobei mithin der von der Längsachse durchdrungene Punkt der Tragfläche ortsfest verbleibt. Als winkelbewegliche Gelenkkupplung zwischen dem freien Ende des Lagerzapfens und dem freien Ende des Stützzapfens ist ein Kardangelenk vorgesehen.

Obwohl der Abgabevorgang mit den aus dieser Druckschrift bekannten Förderelementen gegenüber dem vorhergehend beschriebenen Stand der Technik besser ist, ist er im Hinblick auf eine schonende Behandlung insbesondere von länglichen Stückgutteilen, die in Förderrichtung auf den Förderelementen liegen, noch nicht optimal, da die einem Stückgutteil beim Abkippen erteilte Drehbewegung sehr begrenzt ist und wie bei dem vorher beschriebenen Stand der Technik ausschließlich durch Schwerkraftwirkung erfolgt.

Der vorliegenden Erfindung liegt die Aufgabe zugrunde, das gattungsgemäße Förderelement insbesondere dahingehend zu verbessern, daß eine äußerst schonende Abgabe der Stückgutteile gewährleistet ist, wobei einem abzugebenden Stückgutteil beim Abgabevorgang über die Schwerkraftwirkung hinaus ein für eine schonende Abgabe zweckmäßiger Bewegungsablauf eingeprägt werden soll.

Die Lösung dieser Aufgabe erfolgt erfindungsgemäß durch das kennzeichnende Merkmal des Anspruches 1.

Bei dem erfindungsgemäßen Förderelement bleibt der Punkt der Tragfläche, der durch die Längsachse des Lagerzapfens durchsetzt wird, ersichtlich nicht ortsfest, sondern wird beim Abgeben des Stückgutteils aufgrund der Drehung des Tragelementes um die Längsachse des Lagerzapfens und des dabei um das Gelenk erfolgenden gesteuerten Schwenkens des Lagerzapfens relativ zum Stützzapfen gleichzeitig zur Seite, nach unten und nach vorn bewegt, so daß die Tragfläche bei der erfolgenden Kipp-Drehbewegung aus ihrer horizontalen Transportstellung im Förderzustand in ihre Abgabe-Endstellung eine Bewegung ausführt, welches das Stückgutteil in Richtung auf die Abgabestelle begleitet und ihm dabei eine quer zur Förderrichtung gerichtete Geschwindigkeitskomponente einprägt. Dabei hat sich gezeigt, daß durch eine derartige Ausbildung, die bei geeigneter Ausgestaltung mit verhältnismäßig einfachen und sehr robusten Bauteilen zu erzielen ist, eine äußerst schonende Abgabe der Stückgutteile erfolgt, ein Überschlagen von Stückgutteilen auszuschließen ist, ein Stückgutteil selbst bei unterschiedlicher Plazierung auf der Tragfläche mit relativ geringer Streubreite abgegeben wird, und längliche Stückgutteile, die im Förderzustand in ihrer Längsrichtung auf der Tragfläche angeordnet sind, bei der Abgabe um einen beachtlichen Winkel gedreht werden können, so daß Aufnahmeeinrichtungen an einer Abgabestation entsprechend schmaler gehalten werden können und die auf das Stückgutteil beim anschließenden Ausrichten einwirkenden Kräfte entsprechend klein sind.

Obwohl die Längsachse des Stützzapfens grundsätzlich unter einem anderen Winkel zur Horizontalen verlaufen kann als die Längsachse des Lagerzapfens, hat es sich als besonders zweckmäßig erwiesen, wenn die beiden Längsachsen im Förderzustand des Tragelementes bzgl. einer zwischen dem Tragelement und dem Stützteil verlaufenden horizontalen Bezugsebene spiegelsymmetrisch zueinander verlaufen, also – von ihrem Schnittpunkt ausgehend – in einer Seitenansicht V-förmig angeordnet sind.

Zur Erzeugung der beim Abgeben eines Stückgutteils von der Tragfläche des Förderelementes vorgesehenen Drehung des fest mit dem Tragelement verbundenen Lagerzapfens um dessen Längsachse sowie der dieser Bewegung überlagerten, gesteuerten Schwenkbewegung des Lagerzapfens relativ zum Stützzapfen ist bevorzugt zwischen dem Tragelement und dem Stützteil des Förderelementes ein Kippelement angeordnet, welches jeweils an dem Lagerzapfen und dem Stützzapfen drehbar gelagert und jeweils in Längsrichtung der beiden Zapfen unverschieblich angeordnet ist.

Gemäß einer besonders bevorzugten Ausgestaltung der vorliegenden Erfindung kann das Kippelement als V-förmiger Rohrkörper ausgebildet sein, dessen einer (erster) Schenkel konzentrisch zum Lagerzapfen bzw. dessen Längsachse und dessen anderer (zweiter) Schenkel konzentrisch zum Stützzapfen bzw. dessen Längsachse verläuft, wobei die beiden jeweils rechtwinklig zu der betreffenden Längsachse verlaufenden Stirnseiten des Kippelementes bevorzugt jeweils mit geringem Zwischenraum einer parallelen Fläche des Tragelementes bzw. des Stützteils gegenüberliegen und das Kippelement jeweils zum Tragelement bzw. zum Stützteil abgedichtet sein kann, um die Lagerstellen und das die beiden Zapfen verbindende Gelenk vor einer Verschmutzung zu schützen.

Im Förderzustand ist das Kippelement zweckmäßigerweise mittels eines lösbaren Verriegelungsmittels gegen eine Drehung verriegelt, wobei das Verriegelungsmittel mittels eines an jeder Abgabestelle angeordneten, gesteuert zu betätigenden Entriegelungsmittels zu entriegeln ist. Nach Lösen der zweckmäßigerweise am Stützteil erfolgenden Verriegelung des Kippelementes, kann das Kippelement sodann durch Betätigung eines an einer Abgabestelle angeordneten Betätigungsmittels gesteuert um die Längsachse des Stützzapfens gedreht werden, was einerseits ein Schwenken des Lagerzapfens um die Längsachse des Stützzapfens zur Folge hat und andererseits eine Drehung des Lagerzapfens um seine Längsachse.

Weitere bevorzugte Ausgestaltungen der vorliegenden Erfindung sind in Unteransprüchen gekennzeichnet.

Die Erfindung ist nachstehend an einem Ausführungsbeispiel unter Bezugnahme auf eine Zeichnung weiter erläutert. Es zeigt

Fig. 1 eine stark schematisierte Darstellung eines Teilabschnittes eines Förderstranges eines Stückgutförderers mit Kipp-Förderelementen in Seitenansicht;

Fig. 2 eine teilweise Draufsicht auf die Darstellung gemäß Fig. 1;

Fig. 3 eine vereinfachte Teildarstellung eines erfindungsgemäßen Kipp-Förderelementes in Seitenansicht, teilweise im Schnitt;

Fig. 4 eine vereinfachte Teildarstellung eines Förderelementes im Förderzustand; und

Fig. 5 eine Fig. 4 entsprechende Darstellung, in welcher sich das Tragelement des Förderelementes in Abgabestellung befindet.

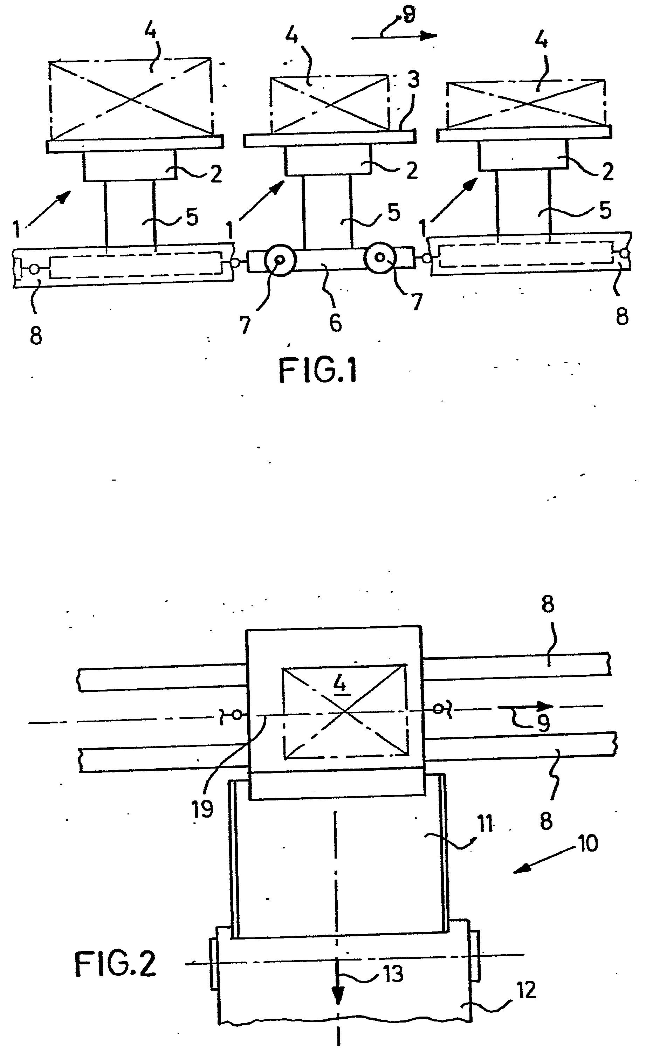

Die Fig. 1 und 2 zeigen in einer stark schematischen Darstellung einen Teil eines als Sorter vorgesehenen Stückgutförderers. Der Sorter besteht aus einer Vielzahl von Förderelemnten 1, die jeweils gelenkig miteinander verbunden sind und einen endlosen Förderstang bilden, welcher in einer horizontalen Ebene umläuft, jedoch auch raumgängig verlaufen könnte. Die Förderelemente 1 bestehen jeweils im wesentlichen aus einem Tragelement 2, welches an seiner Oberseite die Tragfläche 3 für ein Stückgutteil 4 aufweist und über eine im ganzen mit 5 bezeichnete Stützeinrichtung an einem Stützteil 6 abgestützt ist, welches mit Laufrollen 7 an einer Führung 8 verführbar ist, die als Doppelschiene ausgebildet ist (s. Fig. 2) und in Förderrichtung 9 verläuft.

Die Stückgutteile 4 sind jeweils an mehreren in der Zeichnung nicht dargestellten Aufgabestellen auf die Tragfläche 3 eines Förderelementes 1 aufzugeben und durch Schrägstellung der im Förderzustand horizontalen Tragfläche 3 wahlweise an einer von mehreren längs der Förderstrecke vorgesehenen Abgabestationen seitlich zur Förderrichtung 9 abzugeben.

Eine derartige Abgabestation 10 ist in Fig. 2 schematisch dargestellt. Sie enthält außer Einrichtungen, mittels derer eine Abgabe eines von einem bestimmten Förderelement 1 zugeförderten Stückgutteils 4 auszulösen ist, eine schräg zur Horizontalen verlaufende Rutsche 11, die so angeordnet ist, daß ein abzugebendes Stückgutteil 4 beim Heruntergleiten von der Tragfläche 3 des betreffenden Förderelementes 1 auf die Rutsche 11 gelangt und von dieser auf einen Förderer 12 der Abgabestation 10 aufgegeben wird, welcher das betreffende Stückgutteil 4 gemäß dem Pfeil 13 quer zur Förderrichtung gemäß dem Pfeil 9 abfördert.

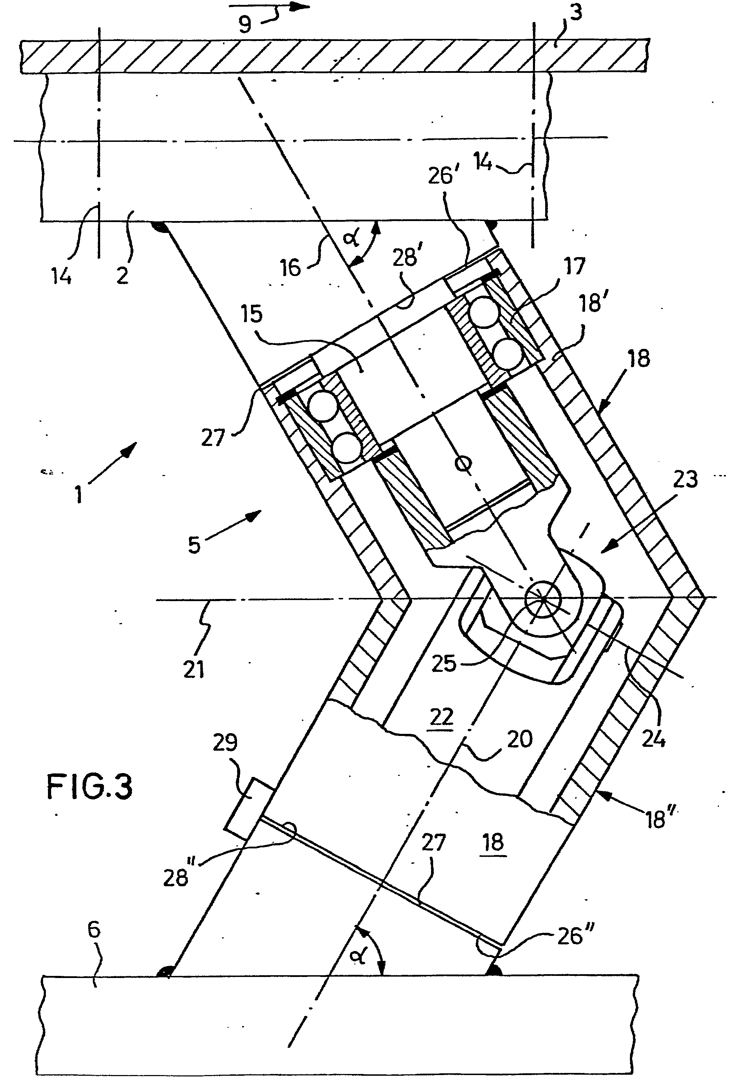

Fig. 3 zeigt in einer gegenüber den Fig. 1 und 2 erheblich vergrößerten, etwas schematisierten seitlichen Teilansicht ein Förderelement 1, dessen Tragelement 2 mit Verbindungsmitteln 14, von denen nur die Mittellinien dargestellt sind, mit der Tragfläche 3 zum Abstützen eines Stückgutteils 4 verbunden ist.

Von der Unterseite des Tragelementes 2 erstreckt sich ein Lagerzapfen 15 des Förderelementes 1 schräg nach unten, dessen Längsachse mit 16 bezeichnet ist. Das fest mit der Tragfläche 3 verbundene Tragelement 2 ist in einer weiter unten noch im einzelnen beschriebenen Weise mittels des Lagerzapfens 15 relativ zum Stützteil 6 um die Längsachse 16 drehbar gelagert, und zwar mittels eines Lagers 17, bei dem es sich im vorliegenden Fall um ein Wälzlager handelt, dessen Innenring fest am Lagerzapfen 15 befestigt, und dessen Außenring mit einem im wesentlichen die Stützeinrichtung 5 bildenden Kippelement 18 verbunden ist, welches weiter unten noch im einzelnen beschrieben ist. Die Längsachse 16 verläuft mit der in Förderrichtung 9 verlaufenden Symmetrieachse 19 (s. Fig. 2) des Tragelementes 2 bzw. dessen Tragfläche 3 in einer gemeinsamen Vertikalebene und schließt mit dem in Förderrichtung 9 vornliegenden Abschnitt der Tragfläche 3 einen spitzen Winkel α ein.

Der fest mit dem Tragelement 2 verbundene Lagerzapfen des Förderelementes 1 ist beim Kippen des Tragelementes 2 um einen zu seiner Längsachse 16 abgewinkelt angeordneten Stützzapfen 22 gesteuert schwenkbar, wie sich aus der weiteren Beschreibung noch im einzelnen ergibt. Die Längsachse 20 des Stützzapfens 22 verläuft im Förderzustand des Tragelementes 2, also bei horizontaler Tragfläche 3, in derselben Ebene (Ausgangsebene) wie die Längsachse 16 und die Symmetrieachse 19 des Tragelementes 2. Im übrigen verläuft die Längsachse 20 im Förderzustand des Tragelementes 2 bzgl. einer zwischen dem Tragelement 2 und dem Stützteil 6 verlaufenden horizontalen Bezugsebene 21 spiegelsymmetrisch zur Längsachse 16 des Lagerzapfens 15, wobei mithin der Winkel α zur Horizontalen gleich groß ist und beim dargestellten Ausführungsbeispiel 60° beträgt.

Der Lagerzapfen 15 des Förderelementes 1 ist an seinem unteren Ende an dem vom Stützteil 6 schräg hochstehenden Stützzapfen 22 angelenkt, der fest mit dem Stützteil 6 verbunden ist. Zwischen dem Kippelement 18 und dem Stützzapfen 22 ist in analoger Weise wie beim Lagerzapfen 15 ein Lager angeordnet, welches der Einfachheit halber in der Zeichnung nicht im einzelnen dargestellt ist.

Der Lagerzapfen 15 ist mit dem Stützzapfen 22 des Förderelementes 1 durch ein Kardangelenk 23 verbunden. Die eine Drehachse 24 des Kardangelenkes 23 verläuft in der Ausgangsebene, in welcher sich die beiden Längsachsen 16, 20 im Transportzustand befinden und in welcher auch die Symmetrieachse 19 der Tragfläche 3 im Förderzustand verläuft. Bei der in der Ausgangsebene der beiden Längsachsen 16, 20 verlaufenden Drehachse 24 des Kardangelenkes 23 handelt es sich um eine Achse, die rechtwinklig zur Längsachse 20 des Stützzapfens 22 verläuft, während die andere Drehachse 25 des Kardangelenkes 23 selbstverständlich wiederum rechtwinklig zur Drehachse 24 angeordnet ist.

Wie bereits weiter oben angedeutet worden ist, ist das zwischen dem Tragelement 2 und dem Stützteil 6 des Förderelementes 1 angeordnete Kippelement 18 jeweils am Lagerzapfen 15 und am Stützzapfen 22 mittels eines Lagers (z.B. 17) drehbar gelagert, jedoch jeweils in Längsrichtung der Zapfen 15 bzw. 22 bzw. deren Längsachsen 16 bzw. 20 nicht verschiebbar.

Das Kippelement 18 ist als V-förmiger Rohrkörper ausgebildet, dessen dem Tragelement 2 zugekehrter oberer (erster) Schenkel 18' konzentrisch zum Lagerzapfen 15 verläuft, und dessen zweiter Schenkel 18" konzentrisch zum Stützzapfen 22 verläuft. Die beiden jeweils rechtwinklig zu der betreffenden Längsachse 16 bzw. 20 verlaufenden Stirnseiten 26, bzw. 26" des Kippelementes 18 sind jeweils mit einem geringen Zwischenraum 27 an einer parallelen Fläche 28, bzw. 28" des Tragelementes 2 bzw. des Stützteils 6 gegenüberliegend angeordnet, wobei die Zwischenräume 27 jeweils mittels einer in der Zeichnung nicht dargestellten Dichtung abgedichtet sind.

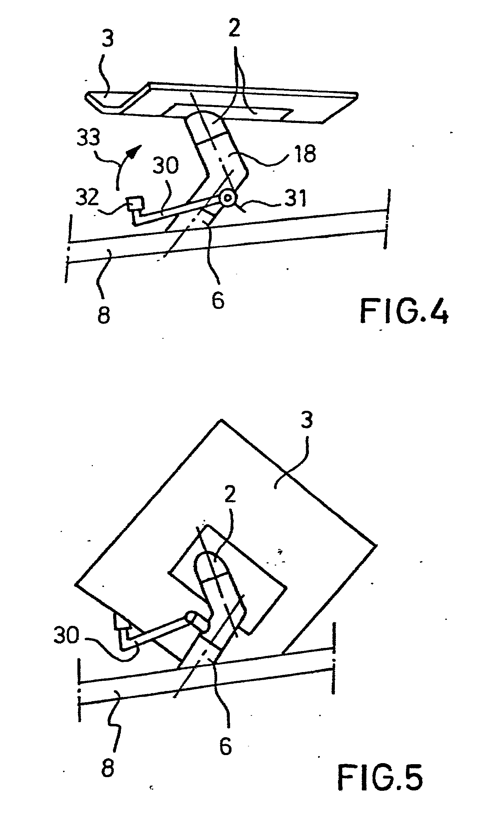

Das Kippelement 18 ist in dem in Fig. 3 und Fig. 4 dargestellten Förderzustand mittels eines in Fig. 3 lediglich schematisch dargestellten Verriegelungsmittels 29 gegen eine Drehung am Stützteil 6 verriegelt. Da sich das Kippelement 18 im verriegelten Zustand nicht um die Längsachse 20 drehen kann, ist demgemäß auch das Tragelement 2 über die beiden Zapfen 15, 22 und das diese verbindende Kardangelenk 23 verriegelt. Das Verriegelungsmittel 29 des Förderelementes 1 ist mittels eines an jede Abgabestation 10 angeordneten, gesteuert zu betätigenden Entriegelungsmittels zu entriegeln. Eine derartige Entriegelung kann bspw. dadurch erfolgen, daß an dem Kippelement 18 gemäß Fig. 4 ein Hebel 30 an einer horizontalen Schwenkachse 31 angelenkt ist, der mit seinem seitlich vorstehenden freien Ende, an dem bspw. eine Rolle 32 angebracht sein kann, an derjenigen Abgabestation 10, an welcher das Förderelement das von ihm transportierte Stückgutteil 4 abgeben soll, auf eine Rampe auffährt und um die Schwenkachse 31 in Richtung des Pfeils 33 hochgeschwenkt wird, wodurch von dem Hebel 30 auf das Verriegelungsmittel 29 eingewirkt und dieses entriegelt wird. Da das Förderelement 1 nach beiden Seiten entleerbar sein soll, ist selbstverständlich an jeder Seite ein entsprechender Hebel 30 angeordnet bzw. ein Bauteil vorgesehen, welches beiderseits der Förderstrecke an einer Abgabestation 10 zwecks Entriegelung des Verriegelungsmittels 29 zu betätigen ist.

Nachdem der in Fig. 3 der besseren Übersicht halber nicht dargestellte Hebel 30 hochgeschwenkt worden ist und das Verriegelungsmittel 29 demgemäß entriegelt worden ist, wird das Kippelement 18 mittels eines an der betreffenden Abgabestation 10 angeordneten Betätigungsmittels gesteuert um die Längsachse 20 des Stützzapfens 22 geschwenkt. Dieses kann bspw. dadurch erfolgen, daß die Rolle 32 des Hebels 29 in eine an der Abgabestation 10 angeordnete Führungsschiene einfährt, welche so gekrümmt ist, daß beim Passieren der Rolle 32 eine Drehung des Kippelementes 18 um die Längsachse 20 erfolgt.

Beim Drehen des Kippelementes 18 um die Längsachse 20 verändert sich die Stellung des in der Führung 8 geführten Stützteils 6 relativ zur Führung 8 – abgesehen von der Vorwärtsbewegung in Förderrichtung – ersichtlich nicht. Dagegen bewirkt ein Schwenken des Kippelementes 18 um die Längsachse 20 eine Dreh-Kipp-Bewegung des Tragelementes 2 und schwenkt dessen Tragfläche 3 bis in eine in Fig. 5 dargestellte Endstellung, wobei die Entleerungsendstellung gemäß Fig. 5 jedoch einer Betätigung des in Fig. 4 nicht dargestellten, auf der anderen Seite des Kippelementes 18 angeordneten Hebels 30 an einer Abgabestation 10 entspricht, während eine Betätigung des in den Fig. 4 und 5 dargestellten Hebels 30 ein Drehkippen zur anderen Seite bewirken würde. Bei dieser Dreh-Kipp-Bewegung des Tragelementes 2 bzw. dessen Tragfläche 3 aus dessen horizontaler Förderstellung gemäß Fig. 3 und 4 erfolgt eine Drehung der Tragfläche 3 sowohl um die Längsachse 20 als auch um die Längsachse 16, die dabei um die Längsachse 20 bzw. den Stützzapfen 22 geschwenkt wird, so daß sich insgesamt eine geometrisch etwas komplizierte Bewegung der ein Stückgutteil 4 abstützenden Tragfläche 3 des Tragelementes 2 bzw. des Förderelementes 1 ergibt, bei welcher die Tragfläche 3 zur Abgabeseite hinein eine Schrägstellung gebracht wird, dabei jedoch gleichzeitig mittelpunktmäßig abgesenkt und während der Drehung nach vorn bewegt wird, so daß die Tragfläche das Stückgutteil 4 bei der Abgabe zunächst noch unter Vermittlung einer entsprechenden Beschleunigung begleitet und das Stückgutteil 4 in extrem schonender Weise auf die nachgeschaltete Rutsche 11 (s. Fig. 2) übergeben wird.

Durch diese begleitende Bewegung der Tragfläche beim Abgeben und die dabei dem Stückgutteil eingeprägten Bewegungen bzw. Kräfte erfolgt zugleich eine Umlenkung der auf dem Förderelement 1 in Förderrichtung 9 verlaufenden Längsachse des Stückgutteils 4, was insbesondere für längliche Stückgutteile höchst vorteilhaft ist, da diese hierdurch bereits bzgl. ihrer räumlichen Orientierung gedreht werden und demgemäß in günstiger Weise in die Aufnahmeeinrichtung der Abgabestation 10 eingefädelt werden.

Trotz der erheblichen Vorteile des beschriebenen Förderelementes ist dieses ersichtlich mit verhältnismäßig wenigen, einfachen und robusten Bauteilen realisierbar, so daß erfindungsgemäß ein Förderelement geschaffen wurde, welches nicht nur den fördertechnischen Anforderungen – einschließlich sehr schonender Behandlung der Stückgutteile – in hervorragender Weise Rechnung trägt sondern aufgrund seiner einfachen und robusten Ausführbarkeit kostenmäßig günstig und betrieblich äußerst zuverlässig ist.

**Patentansprüche**

1. Kipp-Förderelement für einen Stückgutförderer, dessen angetriebener Förderstrang aus einer Vielzahl gelenkig miteinander verbundener Förderelemente (1) besteht, auf deren im Förderzustand im wesentlichen horizontaler Tragfläche (3) jeweils ein Stückgutteil (4) anzuordnen ist, welches durch Kippen der Tragfläche (3) wahlweise an einer von mehreren längs der Förderstrecke vorgesehenen Abgabestationen (10) seitlich zur Förderrichtung (9) abzugeben ist, mit einem die Tragfläche (3) aufweisenden Tragelement (2), welches über eine Stützeinrichtung (5) an einem längs einer Führung (8) verfahrbaren Stützteil (6) abgestützt ist, wobei das Tragelement (2) mit einem fest an seiner Unterseite angeordneten, schräg nach unten gerichteten, drehbar gelagerten Lagerzapfen (15) versehen und beim Kippen um die Längsachse (16) des Lagerzapfens (15) drehbar ist, der an seinem unteren Ende über eine winkelbewegliche Gelenkkupplung (23) mit einem vom Stützteil (6) hochstehenden, fest mit diesem verbundenen Stützzapfen (22) verbunden ist, dessen Längsachse (20) abgewinkelt zur Längsachse (16) des Lagerzapfens (15) verläuft, dadurch gekennzeichnet, daß der Lagerzapfen (15) beim Kippen des Tragelementes (2) relativ zu dem Stützzapfen (22) gesteuert schwenkbar ist.

2. Förderelement nach Anspruch 1, dadurch gekennzeichnet, daß die Längsachse (20) des Stützzapfens (22) im Förderzustand des Tragelementes (2) bzgl. einer zwischen dem Tragelement (2) und dem Stützteil (6) verlaufenden horizontalen Bezugsebene (21) spiegelsymmetrisch zur Längsachse (16) des Lagerzapfens (15) verläuft.

3. Förderelement nach einem der vorhergehenden Ansprüche, dadurch gekennzeichnet, daß der Lagerzapfen (15) mit dem Stützzapfen (22) in an sich bekannter Weise durch ein Kardangelenk (23) verbunden ist, wobei die rechtwinklig zur Längsachse (20) des Stützzapfens (22) verlaufende eine Drehachse (24) des Kardangelenkes (23) in der Vertikalebene verläuft, in welcher die Längsachsen (16, 20) des Lagerzapfens (15) und des Stützzapfens (22) im Förderzustand verlaufen.

4. Förderelement nach einem oder mehreren der vorhergehenden Ansprüche, dadurch gekennzeichnet, daß zwischen dem Tragelement (2) und dem Stützteil (6) ein Kippelement (18) angeordnet ist, welches jeweils an dem Lagerzapfen (15) und dem Stützzapfen (22) drehbar gelagert ist.

5. Förderelement nach Anspruch 4, dadurch gekennzeichnet, daß das Kippelement (18) jeweils in Längsrichtung der beiden Zapfen (15, 22) unbeweglich angeordnet ist.

6. Förderelement nach Anspruch 4 oder 5, dadurch gekennzeichnet, daß das Kippelement (18) als V-förmiger Rohrkörper ausgebildet ist, dessen einer (erster) Schenkel (18') konzentrisch zum Lagerzapfen (15) bzw. dessen Längsachse (16) und dessen anderer (zweiter) Schenkel (18") konzentrisch zum Stützzapfen (22) bzw. dessen Längsachse (20) verläuft.

7. Förderelement nach Anspruch 6, dadurch gekennzeichnet, daß die beiden jeweils rechtwinklig zu der betreffenden Längsachse (16 bzw. 20) verlaufenden Stirnseiten (26, bzw. 26") des Kippelementes (18) jeweils mit geringem Zwischenraum (27) einer parallelen Fläche (28' bzw. 28") des Tragelementes (2) bzw. des Stützteils (6) gegenüberliegen.

8. Förderelement nach einem oder mehreren der Ansprüche 4 bis 7, insbesondere nach Anspruch 7, dadurch gekennzeichnet, daß das Kippelement (18) jeweils zum Tragelement (2) und zum Stützteil (6) abgedichtet ist.

9. Förderelement nach einem oder mehreren der Ansprüche 4 bis 8, dadurch gekennzeichnet, daß das Kippelement (18) im Förderzustand mittels eines lösbaren Verriegelungsmittels (29) am Stützteil (6) verriegelt ist, und daß das Verriegelungsmittel (29) mittels eines an einer Abgabestation (10) angeordneten, gesteuert zu betätigenden Entriegelungsmittels zu entriegeln ist.

10. Förderelement nach einem oder mehreren der Ansprüche 4 bis 9, insbesondere nach Anspruch 9, dadurch gekennzeichnet, daß das Kippelement (18) bei Betätigung durch ein an jeder Abgabestation (10) angeordnetes Betätigungsmittel gesteuert um die Längsachse (20) des Stützzapfens (22) zu drehen ist.

11. Förderelement nach einem oder mehreren der Ansprüche 4 bis 10 dadurch gekennzeichnet, daß an dem Kippelement (18) wenigstens ein Hebel (30) angeordnet ist, der bei Betätigung durch ein Betätigungsmittel einer Abgabestation (10) unter Entriegelung des Verriegelungsmittels (19) um seine Anlenkstelle (31) zu schwenken ist und unter Drehung des Kippelementes (18) um die Längsachse (20) des Stützzapfens (22) zu drehen ist.

12. Förderelement nach einem oder mehreren der vorhergehenden Ansprüche, dadurch gekennzeichnet, daß die Längsachse (16) des Lagerzapfens (15) so zur Tragelement (2) angeordnet ist, daß sie in Richtung der Längssymmetrieachse (19) der Tragfläche (2) zur Quersymmetrieachse der Tragfläche (3) versetzt ist.

**Claims**

1. Tilting conveyor element for a parcel goods conveyor, the powered conveyor track of which consists of a large number of conveyor elements (1) hinged onto one another, one parcel-type item (4) at a time being disposed on the carrying surface (3) of said elements, which surface is substantially horizontal when in the transport mode, and said parcel-type item being discharged, by tilting the carrying surface (3), sideways to the direction of transport (9) at any desired one of a plurality of discharge stations (10) provided along the conveyor line, wherein a carrier element (2) incorporates the carrying surface (3), which rests by means of a support device (5) on a support member (6) adapted to slide along a guide (8), the carrier element (2) having a rotatably mounted bearing journal (15) disposed fixedly on its lower face, directed diagonally downward, and adapted to rotate about the longitudinal axis (16) of the bearing journal (15) during the tilting action, said bearing journal being joined at its bottom end, via a flexible coupling (23) adapted to be moved at an angle, to a vertical journal (22) protruding from the support member (6) and permanently joined thereto, the longitudinal axis (20) of said vertical journal running at an angle to the longitudinal axis (16) of the bearing journal (15), characterised in that when the carrier element (2) is tilted, the bearing journal (15) can be swivelled relative to the vertical journal (22) in a controlled manner.

2. Conveyor element according to claim 1, characterised in that when the carrier element (2) is in the transport mode with respect to a horizontal plane of reference (21) running between the carrier element (2) and the support member (6), the longitudinal axis (20) of the vertical journal (22) runs in mirror symmetry to the longitudinal axis (16) of the bearing journal (15).

3. Conveyor element according to either of the preceding claims, characterised in that the bearing journal (15) is joined to the vertical journal (22) in a per se known manner by a cardan joint (23), one axis of rotation (24) of the cardan joint (23) which axis runs at right angles to the longitudinal axis (20) of the vertical plane in which the longitudinal axes (16, 20) of the bearing journal (15) and of the vertical journal (22) run when in the transport mode.

4. Conveyor element according to one or more of the preceding claims, characterised in that between the carrier element (2) and the support member (6) there is arranged a tilting element (18) which is rotatably mounted respectively on the bearing journal (15) and the vertical journal (22).

5. Conveyor element according to claim 4, characterised in that the tilting element (18) is immovably disposed in the longitudinal direction of each of the two journals (15, 22).

6. Conveyor element according to claim 4 or 5, characterised in that the tilting element (18) is a V-shaped tubular body, one (first) leg (18') of which runs concentric to the bearing journal (15), or the longitudinal axis (16) thereof, and the other (second) leg (18") of which runs concentric to the vertical journal (22), or longitudinal axis (20) thereof.

7. Conveyor element according to claim 6, characterised in that the two end faces (26' and 26" respectively) of the tilting element (18), each of which faces runs at right angles to the corresponding longitudinal axis (16 and 20 respectively), oppose a parallel face (28' and 28" respectively) of the carrier element (2) or of the support member (6), in each case with a slight clearance (27).

8. Conveyor element according to one or more of claims 4 to 7, especially claim 7, characterised in that the tilting element (18) is sealed off from the carrier element (2) and from the support member (6).

9. Conveyor element according to one or more of claims 4 to 8, characterised in that in the transport mode the tilting element (18) is locked to the support member (6) by means of a disconnectable clamping means (29), and that the clamping means (29) is unlocked by means of an unclamping means disposed at a discharge station (10) and operated in a controlled manner.

10. Conveyor element according to one or more of claims 4 to 9, especially claim 9, characterised in that the tilting element (18) is rotated in a controlled manner about the longitudinal axis (20) of the vertical journal (22) when operated by an actuating device disposed at each discharge station (10).

11. Conveyor element according to one or more of claims 4 to 10, characterised in that at least one lever (30) is disposed on the tilting element (18), said lever, when operated by an actuating device on a discharge station (10), being swivelled about its hinge point (31), thereby unlocking the clamping means (19), and rotated about the longitudinal axis (20) of the vertical journal (22), thereby rotating the tilting element (18).

12. Conveyor element according to one or more of the preceding claims, characterised in that the longitudinal axis (16) of the bearing journal (15) is so disposed relative to the carrier element (2) as to be offset to the axis of transverse symmetry of the carrying surface (3) in the direction of the axis of longitudinal symmetry (19) of the carrying surface (3).

## Revendications

1. Elément de transport et de basculement pour un convoyeur de charges individuelles, dont le tronçon de transport est composé d'un pluralité d'éléments de transport (1) reliés entre-eux de manière articulée, une charge individuelle (4) étant à déposer sur la surface porte-charge (3), sensiblement horizontale au moment du transport, de chacun des éléments de transport (1), cette charge individuelle étant à délivrer sélectivement, latéralement à la direction de transport (9), et par basculement de la surface porte-charge (3) à l'une de plusieurs postes de distribution (10) agencés le long de la voie de transport, l'élément de transport comportant un élément porte-charge (2) présentant la surface porte-charge (3) en étant supporté, au moyen d'un support d'appui (5), par une pièce-support (6) pouvant circuler le long d'un guidage (8), l'élément porte-charge (2) comportant en outre, fixé de manière rigide sur sa face inférieure, un tourillon (15) monté tournant et incliné vers le bas, l'élément porte-charge pouvant tourner, lors du basculement, autour de l'axe longitudinal (16) du tourillon (15) qui, à son extrémité inférieure, est relié, par l'intermédiaire d'un accouplement articulé (23) à mobilité angulaire, à un tourillon-support (22) relié de manière rigide à la pièce-support (6) en en faisant saillie vers le haut, l'axe longitudinal (20) de ce tourillon-support (22) s'étendant de manière coudée par rapport à l'axe longitudinal (16) du tourillong (15), caractérisé en ce que le tourillon (15) peut pivoter de manière contrôlée, par rapport au tourillon-support (22), lors du basculement de l'élément porte-charge (2).

2. Elément de transport selon la revendication 1, caractérisé en ce que l'axe longitudinal (20) du tourillon-support (22) est agencé, en mode transport de l'élément porte-charge (2), de manière symétrique à l'axe longitudinal (16) du tourillon (15), par rapport à un plan de référence (21) s'étendant horizontalement entre l'élément porte-charge (2) et la pièce-support (6).

3. Elément de transport selon l'une des revendications précédentes, caractérisé en ce que le tourillon (15) est relié, de manière connue en soi, au tourillon-support (22), au moyen d'un joint universel de Cardan (23), l'un des axes de rotation (24) du joint de Cardan (23) s'étendant dans le plan vertical formé par les axes longitudinaux (16, 20) du tourillon (15) et du tourillon-support (22), en mode transport.

4. Elément de transport selon l'une ou plusieurs des revendications précédentes, caractérisé en ce que entre l'élément porte-charge (2) et la pièce-support (6), est agencé un élément de basculement (18) qui est monté tournant sur le tourillon (15) et sur le tourillon-support (22).

5. Elément de transport selon la revendication 4, caractérisé en ce que l'élément de basculement (18) est monté immobile en direction longitudinale de chacun des tourillons (15, 22).

6. Elément de transport selon la revendication 4 ou 5, caractérisé en ce que l'élément de basculement (18) est constitué d'un corps tubulaire en forme de "V", dont l'une (la première) des branches (18') s'étend concentriquement au tourillon (15), à savoir à son axe longitudinal (16), et dont l'autre (la deuxième) branche (18") s'étend concentriquement au tourillon-support (22), à savoir à son axe longitudinal (20).

7. Elément de transport selon la revendication 6, caractérisé en ce que les deux façon frontales (26', 26") de l'élément de basculement (18), s'étendant chacune de manière perpendiculaire à l'axe longitudinal correspondant (16, 20), font face chacune, en laissant libre un faible espace (27), à une surface parallèle (28', 28") de l'élément porte-charge (2) respectivement de la pièce-support (6).

8. Elément de transport selon l'une ou plusieurs des revendications 4 à 7, notamment selon la revendication 7, caractérisé en ce que l'élément de basculement (18) est rendu étanche par rapport à l'élément porte-charge (2) et par rapport à la pièce-support (6).

9. Elément de transport selon l'une ou plusieurs des revendications 4 à 8, caractérisé en ce que, en mode transport, l'élément de basculement (18) est bloqué sur la pièce-support (6) au moyen d'un dispositif de blocage (29) pouvant être libére, et en ce que ce dispositif de blocage (29) peut être déverrouillé au moyen d'un dispositif de déverrouillage agencé dans un poste de distribution et dont l'actionnement peut être commandé de manière contrôlée.

10. Elément de transport selon l'une ou plusieurs des revendications 4 à 9, caractérisé en ce que l'élément de basculement (18) peut tourner de manière contrôlée autour de l'axe longitudinal (20) du tourillon-support (22) lors de l'actionnement par un dispositif de commande agencé à chacun des postes de distribution (10).

11. Elément de transport selon l'une ou plusieurs des revendications 4 à 10, caractérisé en ce que sur l'élément de basculement (18) est agencé au moins un levier (30) qui, lors de l'actionnement par un dispositif de commande d'un poste de distribution (10) et suite au déverrouillage du dispositif de blocage (29), peut pivoter autour de son point d'articulation (31), et tourner autour de l'axe longitudinal (20) du tourillon-support (22), par rotation de l'élément de basculement (18).

12. Elément de transport selon l'une ou plusieurs des revendications précédentes, caractérisé en ce que l'axe longitudinal (16) du tourillon (15) est agencé, par rapport à l'élément porte-charge (2), de manière à être décalé par rapport à l'axe de symétrie transversal de la surface porte-charge (3), dans la direction de l'axe de symétrie longitudinal de la surface porte-charge (3).

EP 0 230 919 B1

FIG.1

FIG.2

FIG.3

FIG.4

FIG.5